(19) Europäisches Patentamt European Patent Office Office européen des brevets

(11) **EP 1 151 242 B1**

(12) **EUROPÄISCHE PATENTSCHRIFT**

(45) Veröffentlichungstag und Bekanntmachung des Hinweises auf die Patenterteilung:
**19.03.2008 Patentblatt 2008/12**

(21) Anmeldenummer: **99964558.3**

(22) Anmeldetag: **09.12.1999**

(51) Int Cl.:
***G01B 11/16*** (2006.01)

(86) Internationale Anmeldenummer:
**PCT/EP1999/009845**

(87) Internationale Veröffentlichungsnummer:
**WO 2000/045124 (03.08.2000 Gazette 2000/31)**

(54) **SENSOR UND VERFAHREN ZUR ERFASSUNG VON ABSTANDSÄNDERUNGEN**

SENSOR AND METHOD FOR DETECTING CHANGES IN DISTANCE

DETECTEUR ET PROCEDE POUR DETECTER DES VARIATIONS DE DISTANCE

(84) Benannte Vertragsstaaten:
**AT BE CH CY DE DK ES FI FR GB GR IE IT LI LU MC NL PT SE**

(30) Priorität: **29.01.1999 DE 19903447**

(43) Veröffentlichungstag der Anmeldung:
**07.11.2001 Patentblatt 2001/45**

(73) Patentinhaber: **Deutsche Telekom AG 53113 Bonn (DE)**

(72) Erfinder:
• **DULTZ, Wolfgang**
  **D-65936 Frankfurt am Main (DE)**
• **DULTZ, Gisela**
  **D-65936 Frankfurt am Main (DE)**
• **FRINS, Erna**
  **11600 Montevideo (UY)**
• **SCHMITZER, Heidrun**
  **D-93051 Regensburg (DE)**

(56) Entgegenhaltungen:
**US-A- 4 389 090     US-A- 5 201 015**

• **F. WASSMANN ET AL: "Berry's phase analysis of polarization rotation in helicoidal fibers" APPLIED OPTICS, Bd. 37, Nr. 18, 20. Juni 1998 (1998-06-20), Seiten 3902-3911, XP002131838 USA**
• **Y. LIBO ET AL: "TWO DIMENSIONAL Hibi FIBER-OPTIC COIL STRAIN SENSOR" ACTA PHOTONCA SINICA, Bd. 26, Nr. 7, Juli 1997 (1997-07), Seiten 618-622, XP000884999 china**

**EP 1 151 242 B1**

**Beschreibung**

Technisches Gebiet:

Die Erfindung betrifft einen Sensor sowie ein Verfahren zur Erfassung von Abstandsänderungen zwischen einem ersten und einem zweiten Ort auf optischer Grundlage.

Stand der Technik:

Zur Längenänderungsmessungen zwischen beweglichen Objekten sind eine Vielzahl von Methoden bekannt. Es sind beispielsweise Sensoren auf der Grundlage elektrischer Methoden bekannt, wie z. B. Dehnungsmeßstreifen. Es werden elektrische Kapazitätsänderungen sowie Änderungen des magnetischen Flusses bei kleinen Längenänderungen ausgenutzt. Optische Methoden zur Bestimmung von Längenänderungen haben den Vorteil, daß zwischen den Punkten, deren Abstandsänderung gemessen werden soll, keine elektrisch leitende Verbindung bestehen muß. Üblich sind Interferometer für kleine und mittlere Entfernungen von etwa 1 $\mu$m bis 1 m, Moiréanordnungen sowie Laufzeitmessungen an Lichtimpulsen. Interferometeranordnungen sind zwar sehr genau, haben aber den Nachteil, daß sie mechanisch äußerst empfindlich und nur mit hohem Justieraufwand zu betreiben sind. Daher müssen sie im wesentlichen schwingungsfrei aufgestellt werden, weshalb sie insbesondere zur Erfassung von Abstandsänderungen bewegter Objekte nicht einfach einsetzbar sind. Moiréanordnungen sind ebenfalls genau, sind aber im Meßbereich oberhalb von einigen Zentimetern nur sehr kostenaufwendig zu realisieren; Laufzeitmessungen an optischen Impulsen bzw. Messungen von Frequenzverschiebungen durch den Dopplereffekt sind nur für größere Entfernungen genau und erfordern eine aufwendige Meßelektronik.

Aus der im Juni 1998 erschienenen Veröffentlichung "Berry's Phase analysis of polarization rotation in helicoidal fibers" in Applied Optics, Band 37, Nr. 18, von F. Wassmann und A. Ankiewicz ist eine Methode bekannt, die Drehung der Polarisation von Licht, welches einen schraubenförmig gewundenen Lichtleiter durchläuft, zu berechnen. Die Drehung der Polarisation kann zur Realisierung eines Lichtleiter-Sensors ausgenützt werden, mit dem die Größe einer Verschiebung bestimmbar ist.

Aus der im Juli 1997 erschienenen Veröffentlichung "Two-dimensional HiBi fiber-optic coil strain sensor", Acta Photonica Sinica, Vol. 26, No 7, Seiten 618-622, XP 000884999, von Y. Libo und A. Farhad ist bekannt, mit Hilfe eines gewundenen Lichtleiters mechanische Spannungen zu messen, wobei der Einfluß der mechanischen Spannung auf den Polarisationszustand von Licht ausgenutzt wird, welches den Lichtleiter durchläuft.

Auch aus der US-A-5 201 015 ist ein Sensor zur Messung mechanischer Spannungen mit Hilfe eines Lichtleiters bekannt. Der Lichtleiter weist konzentrische Windungen auf. Bei Ausübung einer mechanischen Zugspannung auf den Sensor werden die Windungen elastisch gedehnt, wodurch der Wegumfang der Windungen und damit auch der Lichtweg des Lichts im Lichtleiter zunehmen. Die Zunahme des Lichtweges wird als Maß für die von außen einwirkende mechanische Spannung herangezogen.

Aus der US-A-4 389 090 ist eine Vorrichtung zur Herstellung bestimmter Polarisationszustände von Licht in einem Lichtleiter bekannt. Mindestens ein Bereich des Lichtleiters ist als Windung oder Spule ausgebildet. Der Polarisationzustand des Lichts kann durch Verändern der räumlichen Orientierung der Windung oder Spulen sowie durch Tordieren des Lichtleiters eingestellt und verändert werden.

Technische Aufgabe:

Der Erfindung liegt daher die Aufgabe zugrunde, einen Sensor zur Erfassung von Abstandsänderungen zur Verfügung zu stellen, welcher technisch einfach und kostengünstig zu realisieren ist, keine besondere mechanische Stabilität erfordert und zur genauen Bestimmung von kleinen Positionsänderungen einsetzbar ist. Des weiteren soll ein Verfahren zur Erfassung von Abstandsänderungen angegeben werden, welches einfach durchführbar ist.

Offenbarung der Erfindung:

Die Aufgabe wird gelöst durch einen Sensor zur Erfassung von Abstandsänderungen zwischen einem ersten und einem zweiten Ort mit wenigstens einer im wesentlichen schraubenförmig gewendelten Lichtleitfaser, welche mit wenigstens einem der Orte mechanisch verbindbar ist, einem Lichtsender und einer Erfassungseinrichtung für optische Signale. Dabei ist die Erfassungseinrichtung ein Ausgangssignal abzugeben imstande, welches vom Polarisationszustand des über die Lichtleitfaser übertragenen optischen Signals abhängt, und eine Referenz-Lichtleitfaserstrecke vorgesehen ist, welche der Lichtleitfaser nachgebildet ist und über die ein zweites optisches Signal übertragen wird, wobei die über beide Strecken übertragenen optischen Signale in einer gemeinsamen oder in getrennten Erfassungseinrichtungen derart erfaßt werden, daß Unterschiede im Polarisationszustand ermittelbar sind.

Verfahrensmäßig besteht die Lösung der Aufgabe in einem Verfahren zur Erfassung von Abstandsänderungen zwischen einem ersten und einem zweiten Ort, wobei:

a) wenigstens einer der Orte mit einer im wesentlichen schraubenförmig gewendelten Lichtleitfaser mechanisch gekoppelt wird;
b) ein optisches Signal mit bekanntem Polarisationszustand in die Lichtleitfaser eingekoppelt wird,
c) das über die Verbindungsleitung übertragene optische Signal derart erfaßt wird, daß Informationen über dessen Polarisationszustand gewonnen werden;
d) die Abstandsänderung aus den Informationen über den Polarisationszustand des übertragenen Signals ermittelt werden,
e) der Polarisationszustand des optischen Signals nach der Übertragung mit dem vor der Übertragung und/oder mit einem Referenz-Polarisationszustand verglichen wird.

Vorteilhafte Weiterbildungen des Sensors und des Verfahrens sind in den Unteransprüchen 2 bis 8 bzw. 10 bis 14 gekennzeichnet.

Die Erfindung beruht auf dem Prinzip der Polarisationsänderung von Licht in helixförmig gewundenen optischen Fasern bei Änderung der Helixparameter. Die Polarisation des Lichtes am Ausgang einer einfachen schraubenförmig gewendelten optischen Glasfaserleitung ist empfindlich gegenüber Bewegung, besonders gegenüber ziehharmonikaähnlichen Bewegungen der Faser. Diese Abhängigkeit der Polarisation von der Form der Raumkurve der Faser kann direkt zur Messung der Form, z. B. der Länge der Ziehharmonika der Faserwindungen benutzt werden. Damit kann der Abstand zweier beliebiger Orte bestimmt werden, indem sie durch eine solche bewegliche schraubenförmig gewundene elastische Glasfaserstrecke verbunden werden.

Die Hauptursache für die Formabhängigkeit des Polarisationszustandes am Ausgang einer Glasfaser ist die starke Abhängigkeit der optischen Aktivität der Faser von der genauen Form ihrer Schraubenwindungen. Dieser Effekt ist in erster Näherung achromatisch und verursacht keine Polarisationsmodendispersion. Er wird durch eine der sogenannten optischen Berry-Phasen, die Spinredirektionsphase, verursacht. Es handelt sich bei dieser Berry-Phase oder geometrischen Phase um einen Phaseneffekt, der durch die Struktur der Raumkurve der Faser verursacht wird und nicht durch eine optische Weglängendifferenz wie bei der normalen dynamischen Phase des Lichtes. Dennoch führen geometrische Phasen zu denselben Interferenzeffekten des Lichtes wie normale dynamische Phasen.

Die Größe der Spinredirektionsphase in einer schraubenförmig gewundenen Faser ist gleich dem Raumwinkel $\Omega$, den der k-Vektor (k entspricht der Ausbreitungskonstanten $\beta$ in der technischen Literatur) auf der Kugel der Orientierungen der Lichtausbreitung im Gegenuhrzeigersinn umläuft, wenn das Licht in der Faser durch eine Schraubenwindung geführt wird.

Wesentlich ist daher, daß Licht mit einem definierten Polarisationszustand in die gewendelte Lichtleitfaser eingekoppelt wird und das übertragene optische Signal in einer Weise detektiert wird, daß Rückschlüsse auf seinen Polarisationszustand bzw. einzelne Polarisationskomponenten nach Durchlaufen der Lichtleitfaser möglich sind. Aus der Änderung der Parameter des optischen Signals vor und nach der Übertragung oder durch Vergleich mit einer Referenz aus einer Eichmessung oder einer parallel durchgeführten Referenzmessung läßt sich auf die Form bzw. Formänderung der gewendelten Lichtleitfaser und damit auch auf Abstandsänderungen von mit dieser verbundenen Orten rückschließen.

Beispielsweise kann polarisiertes Licht in die Faser eingekoppelt und dessen Polarisationszustand oder die Stärke einer bestimmten Polarisationskomponente nach Durchlaufen der Lichtleitfaser mit einem Polarimeter oder einem Detektor mit vorgeschaltetem Analysator gemessen werden. Aus der Kenntnis der Polarisationen bzw. einzelner Polarisationskomponenten vor und nach der Übertragung kann auf die formbedingte Polarisationsänderung und damit auf die Formänderung der Wendel geschlossen werden.

Wird das Übertragungssignal mit einer Referenz verglichen, so ist eine genaue Kenntnis des Polarisationszustandes vor der Übertragung nicht unbedingt notwendig. Es reicht, daß stets eine definierte Ausgangssituation vorliegt. Die Referenz ist beispielsweise eine Serie von Meßwerten, die während einer Eichmessung mit der Lichtleitfaser gewonnen wurden und das Ausgangssignal bei bestimmten Abständen des ersten und zweiten Ortes angeben. Alternativ kann ein Referenzsignal auch während der Messung erzeugt werden, indem eine Referenzstrecke, die vorzugsweise der gewendelten Lichtleitfaser nachgebildet ist, ebenfalls mit einem definierten optischen Signal beaufschlagt wird und beide Übertragungssignale miteinander verglichen werden. Dazu werden sie entweder getrennt ausgewertet und beide Intensitäten miteinander verglichen. Das eigentliche Übertragungssignal kann aber auch mit dem Referenz-Übertragungssignal zur Interferenz gebracht und anschließend in einer gemeinsamen Erfassungseinrichtung detektiert werden.

Die Vorteile der Erfindung sind die nahezu universelle Einsetzbarkeit, die keine spiegelnden Flächen oder eine besondere mechanische Stabilität des Systems erforderlich macht. Die Einkopplung des optischen Signals in die Faser sollte zwar mechanisch stabil sein, sie kann jedoch auch separat vom zu messenden System aufgebaut werden. Des weiteren läßt sich der Sensor ohne großen technischen Aufwand aus einzelnen, preisgünstigen Komponenten aufbauen.

Kurzbeschreibung der Zeichnungen, wobei zeigen:

Figur 1    Einen erfindungsgemäßen Sensor mit einer wendelförmigen Lichtleitfaser;

Figur 2    eine Ausschnitt aus einer wendelförmigen Lichtleitfaser;

Figur 3    einen erfindungsgemäßen Sensor zur Erfassung von Längenänderungen eines Teleskoparms.

Wege zur Ausführung der Erfindung:

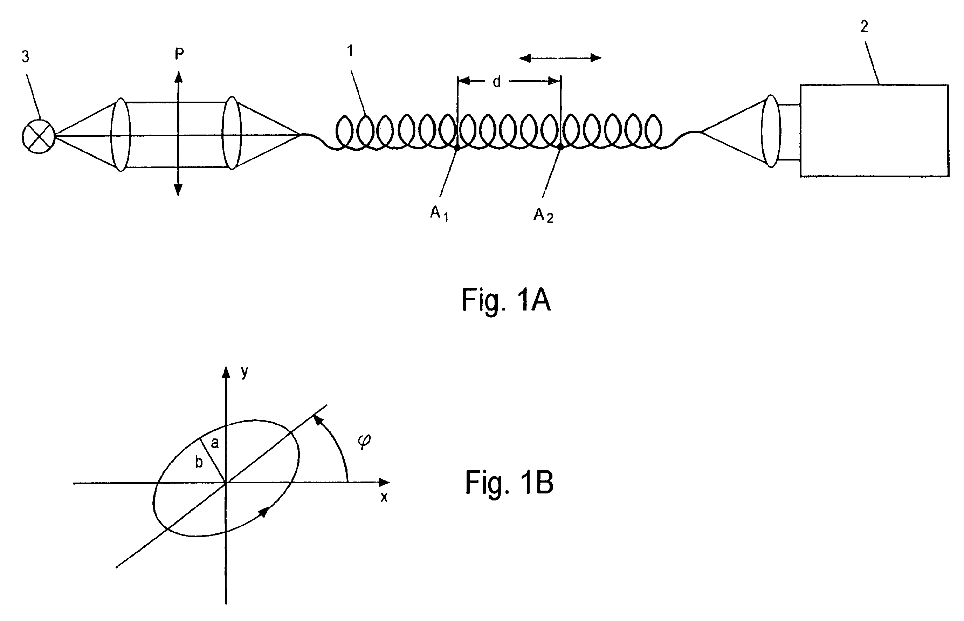

Figur 1A zeigt im unteren Teil einen erfindungsgemäßen Sensor mit einer wendelförmigen Lichtleitfaser 1. Die Lichtleitfaser weist hier einen festen Windungssinn auf. Allgemein reicht es aus, wenn ein Windungssinn bei einer beliebig gebogenen Faser überwiegt.

Die Lichtleitfaser weist des weiteren eine Ummantelung auf, die die Faser in ihrer wendelförmig gebogenen Form hält und Bewegungen, insbesondere solchen entlang der Längsachse der Wendel, elastisch zu folgen imstande ist. Dazu kann die Wendel auch als solche in ein elastisches Trägermaterial eingebettet sein, beispielsweise in einen elastischen Zylinder oder dergleichen.

Der Sensor umfaßt des weiteren eine Lichtquelle 3, die vorzugsweise ein Laser ist. Von der Lichtquelle 3 kommendes, linear polarisiertes Licht wird in die Faserwendel 1 eingekoppelt. Falls die Lichtquelle nicht vollständig polarisiertes Licht abstrahlt, ist zur Herstellung des definierten Polarisationszustandes ein Polarisator P am Eingang der Faser angeordnet. Am Ausgang der Faserwendel wird der Polarisationszustand des übertragenen optischen Signals mit Hilfe eines Polarimeters 2 gemessen. Alternativ kann auch ein einfacher Detektor mit einem vorgeschalteten Analysator eingesetzt werden, mit welchem die Intensität einer definierten Polarisationskomponente erfaßt werden kann.

Figur 1B zeigt schematisch eine Polarisationsellipse zur Darstellung des Polarisationszustandes des Lichts nach Durchlaufen der Übertragungsstrecke. Mit x und y sind die Schwingungsrichtungen des elektrischen Feldvektors bezeichnet. Der Feldvektor beschreibt im allgemeinsten Fall eine Ellipse mit den Hauptachsen a und b, die um den Winkel $\varphi$ gegenüber den Achsen x und y gedreht ist.

Erfindungsgemäß wird ausgenutzt, daß der Orientierungswinkel $\varphi$ der Polarisationsellipse im Ausgang der Faserstrecke proportional zu der in der Wendel zwischen der rechts- und der linkszirkularen Komponente des eingekoppelten linear polarisierten Lichtes eingefügten sog. geometrischen Phase ist. Da sich die geometrische Phase mit der Form der Wendel ändert, ist der Orientierungswinkel $\varphi$ ein Maß für die Form der Wendel. Auf diese Weise kann z. B. der Abstand d zwischen zwei Punkten A1 und A2 auf der Wendel gemessen werden, und damit auch der Abstand bzw. die Abstandsänderung zweier mit den Puntken A1 und A2 starr verbundener Orte.

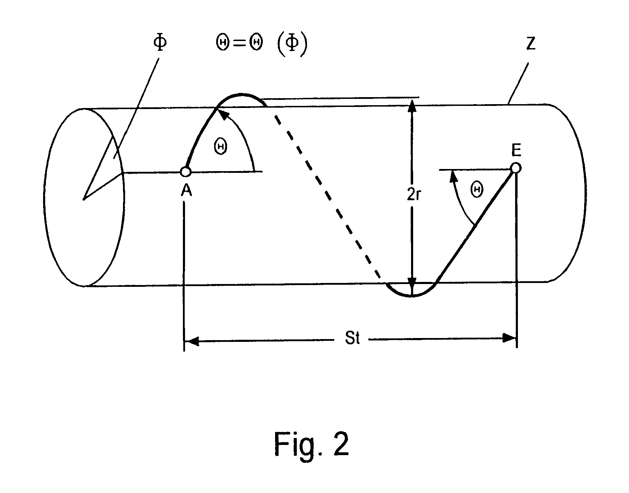

In den nachfolgend beschriebenen, anhand Figur 2 erläuterten Sonderfällen läßt sich die geometrische Spinredirektionsphase und damit die Form der Wendel besonders einfach bestimmen. Jede volle Windung der Glasfaser auf einem Zylinder Z vom Radius r mit der Steigung St, für die der Steigungswinkel $\Theta$ am Anfang A und am Ende E der Windung gleich ist, erzeugt eine Drehung $\varphi$ des eingekoppelten linearpolarisierten Lichtes. Der Drehwinkel $\varphi$ ist gegeben durch

$$(1) \qquad \varphi = \int\limits_{0}^{2\pi}[1 - \cos\Theta(\phi)]d\phi$$

Dabei ist $\phi$ der azimutale Winkel des Zylinders Z, siehe Fig. 2. Für den Fall einer gleichmäßig gewickelten Schraubenlinie ist $\Theta$ eine Konstante, und man erhält:

$$(2) \qquad \varphi(\Theta = \text{konst.}) = 2\pi(1 - \cos\Theta) \text{ und } \cos\Theta = \frac{St}{L}$$

Koppelt man also bei A linear polarisiertes Licht unter dem Winkel $\alpha$ in die Helix ein, so hat es am Ende E eine um den Winkel $\varphi$ gedrehte Polarisation also $\alpha \pm \varphi$. Von der Helizität der Schraube hängt das Vorzeichen des Drehwinkels $\varphi$ ab. L ist die Länge der Faserhelix. Ändert sich nun die Steigung St der Helix, so ändert sich der Steigungswinkel $\Theta$ und damit die Polarisationsrichtung am Faserende E. Bringt man am Ende E einen linearen Analysator an und läßt das Licht dann auf einen Detektor fallen, so registriert dieser eine Intensität I

$$(3) \qquad I = I_0 \cos^2 [\gamma - (\alpha \pm \varphi)]$$

wenn γ der Orientierungswinkel des Analysators ist und $I_0$ die aus der Faser austretende Intensität des linear polarisierten Lichtes. Hier ist angenommen, daß verlustfreie Verhältnisse herrschen und das Licht in der Faser ideal linear polarisiert bleibt.

Für alle anderen Fälle hängt I ebenfalls vom Steigerungswinkel Θ und damit vom Abstand der Punkte AE ab, dies allerdings in komplizierterer Weise. Der Zusammenhang wird vorzugsweise durch Eichung oder durch Messung der Parameter von Gleichung (1) sowie der verschiedenen Verluste ermittelt. Man erhält am Detektor ein Signal, das von dem zu messenden Abstand St abhängt und durch die Parameter r, γ und α in einen geeigneten Meßbereich gebracht werden kann.

Es ist nicht notwendig, nur eine einzige Windung der Faser als Abstandsindikator zu verwenden. Viele Windungen wie in Fig. 1 sowie nicht ganze Zahlen von Windungen sind ebenfalls möglich. Die Berechnung des Drehwinkels φ ist im Falle einer ganzzahligen Windungszahl N zwischen A und E und bei gleichen Steigungswinkeln bei A und E nach Gleichung (1) möglich, wobei die obere Intergrationsgrenze auf 2πN zu erweitern ist. Für nicht ganze Windungszahlen N und ungleichmäßige Windungen ist eine Eichung vorteilhafter als die Berechnung, die nicht mehr nach der einfachen Gleichung (1) erfolgen kann.

Zur Herstellung einer gleichmäßigen Windungsform mit konstanten Steigungswinkeln werden an den Punkten A und E am Anfang und Ende der Windung Achsen angebracht, um die sich die Faser bezüglich des Winkels Θ frei drehen kann. Diese Achsen stehen senkrecht auf der Zylinderachse der Windung. Die Faser ist auf einen elastischen Träger aufgebracht, der bei A und E ein Lager hat, so daß er sich um die Achsen drehen kann. Da sich in diesem Fall die gleichmäßige Helix automatisch als geodätische Kurve zwischen den Punkten A und E auf dem Zylinder einstellt, kann Gleichung (3) bei allen Steigungen St der Helix angewandt werden, für deren Ausbildung die Gesamtlänge der Faser ausreicht.

Im allgemeinen erhält eine optische Faser die (lineare) Polarisation nicht, d.h. beim Austritt aus der Faser ist das Licht nicht mehr so polarisiert, wie es ursprünglich beim Eintritt in die Faser war. Dieser Effekt wird einerseits durch Abweichungen des Faserkerns von der Kreissymmetrie, andererseits von der induzierten Doppelbrechung erzeugt, die durch Biegung der Faser entsteht. In sogenannten doppelbrechungsarmen Fasern, die auch eine niedrige Polarisationsmodendispersion haben, wird z. B. durch schnelle Drehung der Vorform beim Ziehen der Faser eine Orientierungsverteilung der Unsymmetrie des Faserkerns über alle Raumrichtungen erreicht. Solche Fasern sind daher besonders zur Herstellung eines erfindungsgemäßen Längensensors geeignet.

Der Biegungsradius der Faser sollte nicht zu klein sein, um Spannungsdoppelbrechung in der gebogenen Faser zu vermeiden. Eine Abschätzung der Doppelbrechung in gebogenen Fasern wird in L. Jeunhomme, Single-Mode Fiber Optics, N.Y. 1983, S. 60 gegeben. Ideal ist es, wenn die gewundene Faserhelix eine Phasenverzögerung von weniger als λ/10 hat, wobei λ die Betriebswellenlänge ist. Andererseits stören auch höhere Werte der Spannungsdoppelbrechung das Meßprinzip nicht wesentlich, da auch bei elliptisch polarisiertem Licht im Ausgang der Faser durch die Helixdeformation Änderungen des Orientierungswinkels φ, entstehen, die als Maß für die Längenänderung genommen werden können. Große Biegeradien der Faser können sowohl durch Vergrößerung des Helixradius als auch durch Vergrößerung der Helixsteigung erreicht werden.

Eine Eichung des Sensors schließt auch Intensitätsänderungen am Detektor am Ende der Faser ein, die durch Biegung der Faser bei der Änderung des Abstandes AE erfolgen. Eine Längenmessung durch Vergleich der aktuell gemessenen Werte mit in einer Eichmessung ermittelten Werten ist für den praktischen Einsatz des Sensors vorteilhaft, da dabei sämtliche, nicht durch die Längenänderung des der gewundenen Lichtleitfaser hervorgerufenen Einflüsse auf den Polarisationszustand des Lichts eliminiert werden können.

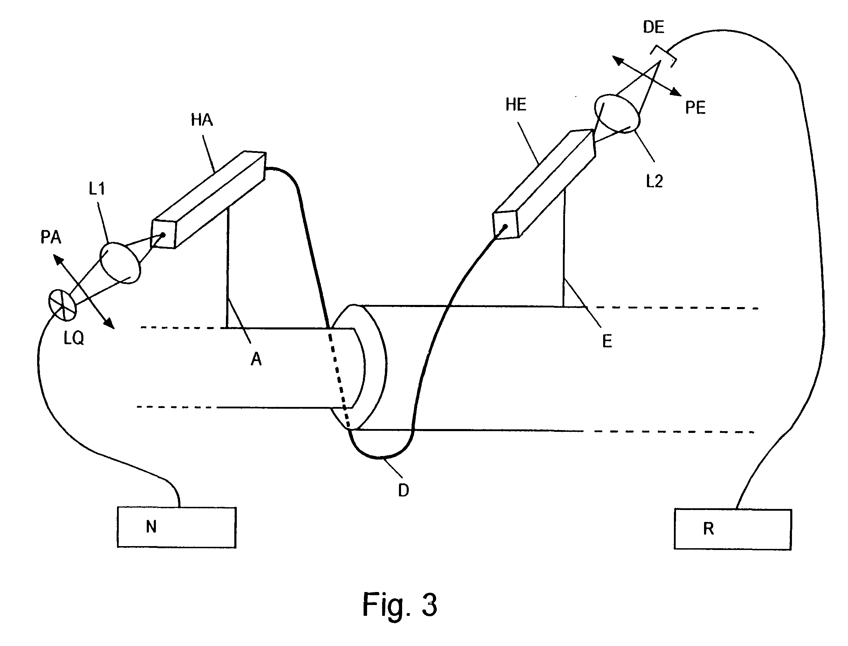

In Figur 3 ist eine praktische Ausführungsform der Erfindung dargestellt. Ein elastischer Faserträger D, z. B. ein Stahl, Bronze- oder Kunststoffdraht, wird mit zwei Halterungen HA, HE versehen, die auf die Achsen bei A und E aufgesteckt werden können, so daß sie sich frei drehen lassen. Die Achsen an den Punkten A, E sind im beschriebenen Beispiel mit zwei Röhren eines Teleskoparms verbunden, dessen Längenänderung gemessen werden soll. Im dargestellten Beispiel wird eine schraubenförmige Lichtleitfaser mit einer einzigen Windung verwendet, die in den Faserträger D eingebettet ist.

Vor dem Halter HA ist eine Lichtquelle LQ angeordnet, die auch mechanisch mit dem Halter HA verbunden sein kann, so daß stabile Einkopplungsbedingungen vorliegen. Die Lichtquelle LQ, die vorzugsweise linear polarisiertes Licht erzeugt, ist z. B. eine Leuchtdiode oder ein Halbleiterlaser. Über eine Linse L1 wird das Licht in die optische Faser einkoppelt, deren Eingang sich am Halter HA befindet. Die Faser ist auf oder in dem elastischen Faserträger D befestigt. Falls die Lichtquelle unpolarisiertes Licht ausstrahlt, muß auch noch der lineare Polarisator PA zwischen Lichtquelle und Faseranfang angebracht werden.

Am Ende E der Windung befindet sich der Halter HE, an dem eine Linse L2 und der feste oder drehbare lineare Analysator PE befestigt ist. Die Linse bildet Licht aus der Faser auf den Detektor DE ab. Lichtquelle LQ und Detektor DE sind durch leicht bewegliche elektrische Zuleitungen mit den entsprechenden Netz- und Registriergeräten N bzw. R verbunden. Um Störeinflüsse zu verringern, sind Lichtquelle, Detektor und Glasfaser lichtdicht gegen die Außenwelt abgedunkelt.

Gewerbliche Anwendbarkeit:

Die Erfindung läßt sich zur genauen Erfassung von Längen- und Abstandsänderungen in einer Vielzahl von Systemen, z.B. von Roboterarmen, vorteilhaft gewerblich einsetzen.

**Patentansprüche**

1. Sensor zur Erfassung von Abstandsänderungen zwischen einem ersten Ort (A1) und einem zweiten Ort (A2) mit wenigstens einer im wesentlichen schraubenförmig gewendelten Lichtleitfaser (1), welche mit wenigstens einem der Orte (A1, A2) mechanisch verbindbar ist, einem Lichtsender (3) und einer Erfassungseinrichtung (DE) für optische Signale, wobei die Erfassungseinrichtung (DE) ein Ausgangssignal abzugeben imstande ist, welches vom Polarisationszustand des über die Lichtleitfaser (1) übertragenen optischen Signals abhängt, und eine Referenz-Lichtleitfaserstrecke vorgesehen ist, welche der Lichtleitfaser (1) nachgebildet ist und über die ein zweites optisches Signal übertragen wird, wobei die über beide Strecken übertragenen optischen Signale in einer gemeinsamen oder in getrennten Erfassungseinrichtungen derart erfaßt werden, daß Unterschiede im Polarisationszustand ermittelbar sind.

2. Sensor nach Anspruch 1, **dadurch gekennzeichnet,**
   **daß** die Erfassungseinrichtung (DE) ein Polarimeter (2) oder ein Detektor mit vorgeschaltetem Analysator ist.

3. Sensor nach Anspruch 1 oder 2, **dadurch gekennzeichnet,**
   **daß** die Lichtleitfaser (1) in Schraubenrichtung flexibel ist und Abstandsänderungen zwischen dem ersten Ort (A1) und dem zweiten Ort (A2) zu folgen imstande ist.

4. Sensor nach einem der Ansprüche 1 bis 3, **dadurch gekennzeichnet,**
   **daß** die Lichtleitfaser (1) mit einem elastischen Trägermaterial (D) verbunden ist, welches bei mechanischer Belastung der Lichtleitfaser (1) eine Formveränderung ermöglicht und die Lichtleitfaser (1) bei Nichtbelastung in ihrer gebogenen Ausgangsform hält.

5. Sensor nach einem der vorangegangenen Ansprüche,
   **dadurch gekennzeichnet,**
   **daß** die Lichtleitfaser (1) um wenigstens ein längliches Trägerelement, vorzugsweise einen Zylinder, gewunden ist, wobei das Trägerelement vorzugsweise flexibel ist.

6. Sensor nach einem der vorangegangenen Ansprüche,
   **dadurch gekennzeichnet,**
   **daß** die Lichtleitfaser (1) am Trägerelement derart befestigt ist, daß sie in ihrer gewundenen Form beweglich, aber auf dem Trägerelement stabilisiert bleibt.

7. Sensor nach einem der vorangegangenen Ansprüche,
   **dadurch gekennzeichnet,**
   **daß** bei der Lichtleitfaser (1) ein Windungssinn überwiegt, die Lichtleitfaser (1) vorzugsweise nur einen Windungssinn aufweist.

8. Sensor nach einem der vorangegangenen Ansprüche,
   **dadurch gekennzeichnet,**
   **daß** die Lichtquelle (1) linear polarisiertes Licht erzeugt und/oder am Eingang der Lichtleitfaser (1) ein Linearpolarisator (P, PA) angeordnet ist.

9. Verfahren zur Erfassung von Abstandsänderungen zwischen einem ersten Ort (A1) und einem zweiten Ort (A2), wobei:

a) wenigstens einer der Orte (A1, A2) mit einer im wesentlichen schraubenförmig gewendelten Lichtleitfaser (1) mechanisch gekoppelt wird;

b) ein optisches Signal mit bekanntem Polarisationszustand in die Lichtleitfaser (1) eingekoppelt wird,

c) das über die Verbindungsleitung übertragene optische Signal derart erfaßt wird, daß Informationen über dessen Polarisationszustand gewonnen werden;

d) die Abstandsänderung aus den Informationen über den Polarisationszustand des übertragenen Signals ermittelt werden,

e) der Polarisationszustand des optischen Signals nach der Übertragung mit dem vor der Übertragung und/oder mit einem Referenz-Polarisationszustand verglichen wird.

10. Verfahren nach Anspruch 9, **dadurch gekennzeichnet,**
**daß** die Abstandsänderung durch Vergleich des detektierten Signals bzw. einzelner Parameter des detektierten Signals mit in einer Eichmessung bestimmten Werten, die einem bestimmten Abstand entsprechen, ermittelt wird.

11. Verfahren nach Anspruch 9, **dadurch gekennzeichnet,**
**daß** die Abstandsänderung aus dem detektierten Signal bzw. einzelner Parameter des detektierten Signals und der Form der Raumkurve der Lichtleitfaser (1) berechnet wird.

12. Verfahren nach Anspruch 9, **dadurch gekennzeichnet,**
**daß** der Referenz-Polarisationszustand der nach Durchlaufen der im mechanischen Ruhezustand vorliegenden Verbindungsstrecke gemessene Polarisationszustand des optischen Signals ist.

13. Verfahren nach einem der Ansprüche 9 bis 12,
**dadurch gekennzeichnet,**
**daß** das optische Signal gemeinsam mit einem Referenzsignal detektiert wird.

14. Verfahren nach einem der Ansprüche 9 bis 12,
**dadurch gekennzeichnet,**
**daß** linear polarisiertes Licht in die Lichtleitfaser (1) eingekoppelt wird und Licht mit einer definierten linearen Polarisation detektiert wird.

## Claims

1. Sensor for detecting distance changes between a first location (A1) and a second location (A2), having at least one substantially helically coiled optical fiber (1) which can be mechanically connected to at least one of the locations (A1, A2), a light transmitter (3), and a detecting device (DE) for optical signals, wherein the detecting device (DE) is capable of emitting an output signal, which signal is dependent upon the polarization state of the optical signal transmitted through the optical fiber (1), and wherein a reference optical fiber path is provided which simulates the optical fiber (1) and through which a second optical signal is transmitted, wherein the optical signals transmitted over both paths are detected in a common detecting device or in separate detecting devices in such a manner that differences in the polarization state can be determined.

2. Sensor according to claim 1, **characterized in that** the detecting device (DE) is a polarimeter (2) or a detector having an analyzer connected ahead of it.

3. Sensor according to claim 1 or 2, **characterized in that** the optical fiber (1) is flexible in the direction of the helix and is capable of following distance changes between the first location (A1) and the second location (A2).

4. Sensor according to any one of claims 1 through 3, **characterized in that** the optical fiber (1) is joined to an elastic carrier material (D), which permits a change in shape in response to mechanical loading of the optical fiber (1), and which retains the optical fiber (1) in its initial curved shape when there is no loading.

5. Sensor according to one of the preceding claims, **characterized in that** the optical fiber (1) is wound around at least one elongated carrier element, preferably a cylinder, wherein the carrier element preferably is flexible.

6. Sensor according to one of the preceding claims, **characterized in that** the optical fiber (1) is secured to the carrier element in such a manner it is movable in its wound form but remains stabilized on the carrier element.

7. Sensor according to one of the preceding claims, **characterized in that** one winding direction predominates in the optical fiber (1), preferably the optical fiber (1) has only one winding direction.

8. Sensor according to one of the preceding claims, **characterized in that** the light source (1) produces linearly polarized light, and/or a linear polarizer (P, PA) is arranged at the input of the optical fiber (1).

9. Method for detecting distance changes between a first location (A1) and a second location (A2), wherein:

   a) at least one of the locations (A1, A2) is mechanically coupled to a substantially helically coiled optical fiber (1);
   b) an optical signal having a known polarization state is coupled into the optical fiber (1);
   c) the optical signal transmitted over the connecting line is detected in such a way that information about its polarization state is obtained;
   d) the distance change is determined from the information about the polarization state of the transmitted signal;
   e) the polarization state of the optical signal after transmission is compared with the polarization state of the optical signal prior to transmission and/or with a reference polarization state.

10. Method according to claim 9, **characterized in that** the distance change is determined through comparison of the detected signal or individual parameters of the detected signal to values determined in a calibration measurement corresponding to a specific distance.

11. Method according to claim 9, **characterized in that** the distance change is calculated from the detected signal or individual parameters of the detected signal and the shape of the three-dimensional curve of the optical fiber (1).

12. Method according to claim 9, **characterized in that** the reference polarization state is the polarization state of the optical signal measured after passage through the connecting path that is present in the mechanical state of rest.

13. Method according to any one of claims 9 through 12, **characterized in that** the optical signal is detected together with a reference signal

14. Method according to any one of claims 9 through 12, **characterized in that** linearly polarized light is coupled into the optical fiber (1), and light having a defined linear polarization is detected.

**Revendications**

1. Capteur de détection de variations de distance entre un premier point (A1) et un second point (A2) comportant au moins une fibre optique (1) pour l'essentiel enroulée en spirale et apte à être reliée mécaniquement à au moins l'un des points (A1, A2), un émetteur de lumière (3) et un dispositif de détection (DE) de signaux optiques, le dispositif de détection (DE) étant apte à délivrer un signal de sortie qui dépend de l'état de polarisation du signal optique transmis par l'intermédiaire de la fibre optique (1), et une liaison de fibre optique de référence étant prévue qui est une reproduction de la fibre optique (1) et par laquelle est transmis un second signal optique, les signaux optiques transmis par l'intermédiaire des deux liaisons étant détectés dans un dispositif de détection commun ou dans des dispositifs de détection distincts de manière à permettre d'obtenir des variations de l'état de polarisation..

2. Capteur selon la revendication 1, **caractérisé en ce que** le dispositif de détection (DE) est un polarimètre (2) ou un détecteur précédé d'un analyseur.

3. Capteur selon la revendication 1 ou 2, **caractérisé en ce que** la fibre optique (1) est souple dans le sens de la spirale et apte à suivre des variations de distance entre le premier point (A1) et le second point (A2).

4. Capteur selon l'une des revendications 1 à 3, **caractérisé en ce que** la fibre optique (1) est reliée à un matériau support (D) élastique qui permet à la fibre optique (1) de se déformer lorsqu'elle est sollicitée mécaniquement et qui maintient la fibre optique (1) dans sa forme initiale cintrée lorsqu'elle n'est pas sollicitée.

5. Capteur selon l'une des revendications précédentes, **caractérisé en ce que** la fibre optique (1) est enroulée au moins autour d'un élément support de forme allongée, de préférence d'un cylindre, l'élément support étant de préférence souple.

**6.** Capteur selon l'une des revendications précédentes, **caractérisé en ce que** la fibre optique (1) est fixée à l'élément support de manière à rester mobile dans sa forme enroulée, mais stable sur l'élément support.

**7.** Capteur selon l'une des revendications précédentes, **caractérisé en ce que**, sur la fibre optique (1), un sens d'enroulement prédomine et **en ce que** la fibre optique (1) ne présente, de préférence, qu'un seul sens d'enroulement.

**8.** Capteur selon l'une des revendications précédentes, **caractérisé en ce que** la source lumineuse (1) génère de la lumière polarisée linéairement et/ou **en ce qu'**un polarisateur linéaire (P, PA) est disposé à l'entrée de la fibre optique (1).

**9.** Procédé de détection de variations de distance entre un premier point (A1) et un second point (A2) dans lequel :

a) au moins l'un des points (A1, A2) est relié mécaniquement à une fibre optique (1) sensiblement enroulée en spirale ;
b) un signal optique dont l'état de polarisation est connu est injecté dans la fibre optique (1),
c) le signal optique transmis par l'intermédiaire de la liaison est détecté de manière à obtenir des informations sur son état de polarisation ;
d) la variation de distance est obtenue à partir des informations sur l'état de polarisation du signal transmis,
e) l'état de polarisation du signal optique étant comparé, après transmission, avec celui qu'il présentait avant la transmission et/ou avec un état de polarisation de référence.

**10.** Procédé selon la revendication 9, **caractérisé en ce que** la variation de distance est obtenue par comparaison du signal détecté ou de certains paramètres du signal détecté avec des valeurs déterminées par une mesure d'étalonnage qui correspondent à une distance donnée.

**11.** Procédé selon la revendication 9, **caractérisé en ce que** la variation de distance est calculée à partir du signal détecté ou de certains paramètres du signal détecté et de la forme de la courbe spatiale de la fibre optique (1).

**12.** Procédé selon la revendication 9, **caractérisé en ce que** l'état de polarisation de référence est celui mesuré une fois que le signal optique a parcouru la liaison à l'état de repos mécanique de celle-ci.

**13.** Procédé selon l'une des revendications 9 à 12, **caractérisé en ce que** le signal optique est détecté conjointement avec un signal de référence.

**14.** Procédé selon l'une des revendications 9 à 12, **caractérisé en ce que** de la lumière polarisée linéairement est injectée dans la fibre optique (1) et **en ce que** de la lumière est détectée à une polarisation linéaire définie.

Fig. 1A

Fig. 1B

$\Theta = \Theta \ (\Phi)$

Z

Φ

E

A

2r

St

Θ

Fig. 2

Fig. 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5201015 A

- US 4389090 A

**In der Beschreibung aufgeführte Nicht-Patentliteratur**

- **F. WASSMANN ; A. ANKIEWICZ.** Berry's Phase analysis of polarization rotation in helicoidal fibers. *Applied Optics,* vol. 37 (18

- Two-dimensional HiBi fiber-optic coil strain sensor. *Acta Photonica Sinica,* vol. 26 (7), 618-622